# FASCICULE DE BREVET EUROPEEN

(11) **EP 2 771 153 B1**
(45) Date de publication et mention de la délivrance du brevet: **18.04.2018**
(21) Numéro de dépôt: 12795495.6
(22) Date de dépôt: 25.10.2012
(51) Int. Cl.: B25J 15/02

(54) **PREHENSEUR DE PIECE A PEINDRE POUR ROBOT MANIPULATEUR**
GREIFER ZUR WERKSTÜCKLACKIERUNG FÜR HANDHABUNGSROBOTER
PAINTING WORKPIECE GRIPPER FOR HANDLING ROBOT

(30) Priorité: 25.10.2011 FR 1159680
(43) Date de publication de la demande: 03.09.2014
(73) Titulaire: Compagnie Plastic Omnium, 69007 Lyon (FR)
(72) Inventeur: TRESSE, David, 70210 Polaincourt (FR)
(74) Mandataire: Remy, Vincent Noel Paul
(86) Numéro de dépôt international: PCT/FR2012/052459
(87) Numéro de publication internationale: WO 2013/060993

(56) Documents cités:
- JP-A- 4 063 642
- JP-A- 2000 031 250
- JP-A- 2002 321 183
- JP-A- 2006 160 523
- JP-A- 2007 276 057

## Description

L'invention concerne le domaine de la peinture de pièces de carrosserie de véhicules automobiles.

La peinture des pièces de véhicules automobiles est souvent réalisée dans une chaîne peinture, qui est une installation dans laquelle des balancelles portant plusieurs pièces à peindre circulent en convoi à travers une succession de postes. Une chaîne peinture peut ainsi comporter la succession de postes suivants :
- flammage,
- application d'un primaire,
- éventuellement étuvage pour séchage, si le primaire utilise l'eau comme solvant (on parle alors de produit « hydro », sinon, on parle de produit « solvanté »),
- application d'une base,
- à nouveau éventuellement étuvage pour séchage, si la base est un produit hydro,
- application de vernis,
- chauffage pour cuisson.

Les produits désignés « primaire », « base » et « vernis » sont aussi appelés « composants de peinture ».

Une autre méthode connue pour peindre des pièces de véhicules automobiles consiste à utiliser des installations de peinture de type à cabine, lesquelles se distinguent des chaînes peinture par le fait que les pièces y sont portées non par des balancelles parcourant une succession de postes, mais par un robot manipulateur qui les déplace devant un ou plusieurs applicateurs fixes dans une cabine de peinture. Le ou les applicateurs étant fixes, l'acheminement des composants de peinture à appliquer et le contrôle des flux d'air sous lesquels les particules de peinture sont projetées sont mieux contrôlés, ce qui, dans certaines applications, peut s'avérer plus économique ou, à tout le moins, davantage adapté aux conditions globales de production.

FR 2 954 716, au nom de la demanderesse, décrit un tel procédé.

Dans ces installations plus compactes, une pièce peut se déplacer très rapidement devant le ou les applicateurs et il est important que cette pièce soit fermement tenue au bout du bras du robot.

Lorsque la pièce présente une certaine souplesse, comme dans FR 2 954 716, le préhenseur qui relie la pièce au bras du robot peut assurer le maintien de la géométrie de la pièce dans une configuration propice à une bonne application de la peinture. Mais la liaison mécanique entre la pièce et le bras du robot reste assurée par des moyens de retenue traditionnels, à savoir généralement des ventouses et des appuis.

Or, de tels moyens de retenue peuvent s'avérer inadaptés pour de très grandes pièces assez lourdes, dont la masse et l'inertie sollicitent fortement la liaison entre préhenseur et pièce, sauf à recourir à des moyens de retenue surdimensionnés.

En outre, les moyens traditionnels de retenue peuvent laisser sur la pièce, une fois peinte, des traces indésirables. Le document JP 200 031250 montre un préhenseur de pièce comprenant un châssis destiné à être fixé à l'extrémité d'un bras de robot, des saillies déplaçables sous forme de tiges dont l'extrémité comporte une forme en creux ayant une conformation permettant d'y engager le bord de la pièce pour la maintenir dans la forme en creux lorsque la saillie est appuyée contre la pièce.

La présente invention vise à proposer un préhenseur spécialisé pour la prise de pièces à peindre qui convient aussi bien à des pièces relativement légères et de petite taille qu'à des pièces relativement lourdes et de grandes dimensions, à la condition que ces pièces présentent une certaine rigidité qui leur permet de conserver leur géométrie pendant qu'elles sont déplacées par le robot.

Au sens de la présente invention, on entend par relativement lourde une pièce dont le poids dépasse 8 kg et on entend par de grandes dimensions une pièce qui possède au moins une dimension dépassant 1 mètre.

Ainsi, la présente invention a pour objet un préhenseur selon la revendicatrion 1. Le préhenseur selon l'invention réunit les avantages :
- de résister aux efforts importants engendrés par la manipulation d'une pièce relativement lourde et de grandes dimensions,
- d'être facile d'utilisation, notamment du fait qu'un mouvement simple des saillies depuis une position écartée de la peau jusqu'à une position en appui contre le bord de la peau suffit à réaliser la prise de la pièce,
- de limiter l'emprise du préhenseur sur la peau, ce qui réduit les marques laissées par ledit préhenseur sur la pièce peinte.
Le fait que l'appui de chaque saillie contre la peau ou le bord de la peau résulte de l'appui des autres saillies contre la peau ou les autres bords de la peau signifie que la peau est prise en sandwich entre les saillies et que la force de compression de la peau, en position statique de la pièce, se répartit entre toutes les saillies par simple équilibrage des forces entre elles.

Les saillies sont choisies parmi :
- des tiges ayant chacune une extrémité munie d'une forme en creux,
- des plateaux ayant un bord d'extrémité muni d'une forme en creux.
- des contre formes présentant un relief complémentaire à celui d'une partie de la peau, aptes à s'encastrer dans la peau de façon intime par simple appui mutuel. De telles contre formes sont en quelque sorte des empreintes 3D en négatif de la partie correspondante de la peau. Lorsque la pièce à peindre est un panneau intérieur de hayon de véhicule automobile, la partie correspondante de la peau est une zone centrale dudit panneau. La contre forme possède donc une face en relief complémentaire de la zone centrale du panneau intérieur du hayon et permet de porter le panneau intérieur par simple encastrement intime dans ladite zone centrale, en combinaison avec les prises des autres saillies.
Le préhenseur comprend deux desdites tiges et une desdites contre formes, les deux tiges étant par exemple déplaçables tandis que la contre forme est par exemple fixe.

Avantageusement, la forme en creux d'au moins une saillie est une gorge transversale à son axe principal. Cette caractéristique rend plus simple le mouvement des moyens de déplacement.

Avantageusement, les formes en creux ont une section évasée, par exemple en V, avec un fond dont la largeur est inférieure à l'épaisseur de la peau et une embouchure dont la largeur est supérieure à l'épaisseur de la peau. Ainsi, le serrage des saillies sur la pièce provoque le pincement de la peau dans les formes en creux.

L'invention a également pour objet une combinaison d'un préhenseur tel que décrit ci-dessus et d'au moins une pièce de carrosserie portée par ce préhenseur. Dans le but de mieux faire comprendre l'invention, on va décrire maintenant à titre d'exemples non limitatifs deux préhenseurs en référence aux figures annexées dans lesquelles :
- la figure 1 représente, en perspective, un hayon d'un véhicule automobile porté par sa face extérieure par le bras d'un robot manipulateur, à l'aide d'un premier préhenseur,
- la figure 2 est une vue rapprochée de la figure 1, montrant la partie haute (par rapport à la figure 1) du préhenseur,
- la figure 3 est une vue rapprochée de la figure 1, montrant la partie basse (par rapport à la figure 1) du préhenseur,
- la figure 4 est une vue de la face extérieure de la peau de hayon portée par le préhenseur,
- la figure 5 est une vue rapprochée de la figure 4, montrant le détail d'une tige à gorge du préhenseur,
- la figure 6 est une vue en perspective d'une variante de la tige à gorge en prise avec une peau percée,
- la figure 7 est une vue en coupe selon VII-VII de la figure 6,
- la figure 8 est une vue en perspective d'un deuxième préhenseur de hayon,
- la figure 9 est une vue de détail d'une tige du préhenseur de la figure 8,
- la figure 10 est une vue de détail d'un plateau du préhenseur de la figure 9,
- la figure 11 est une vue de la face extérieure d'une peau de hayon portée par le préhenseur des figures 8 à 10,
- la figure 12 est une vue de la face intérieure de la peau de hayon de la figure 11 portée par le même préhenseur,
- la figure 13 est une vue de la face extérieure d'une autre peau de hayon portée par le préhenseur des figures 8 à 10,
- la figure 14 est une vue de la face intérieure de la peau de hayon de la figure 13 portée par le même préhenseur.

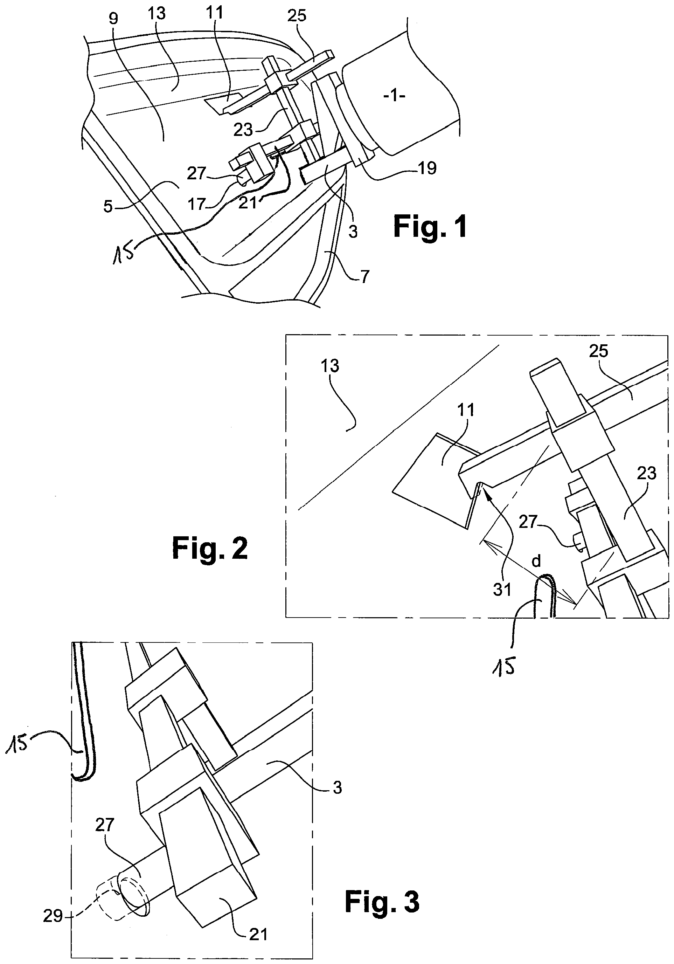

Le bras 1 est celui d'un robot manipulateur (non représenté). A son extrémité, ce bras est équipé d'un préhenseur 3 qui porte un hayon 5 de véhicule automobile, en position renversée par rapport à celle qu'il adopte lorsqu'il est monté sur le véhicule et placé en position de fermeture. On reconnaît, sur ce hayon 5, une partie haute 7 (située en bas sur la figure 1, compte tenu de la position renversée du hayon) formée par un cadre de vitre 7, et une partie basse (située en haut sur la figure 1, compte tenu de la position renversée du hayon) formée par un panneau de peau 9 globalement cintré mais formé de creux et de bosses.

Dans l'exemple, le panneau est réalisé en matière plastique thermodurcissable. D'autres matières possibles sont par exemple thermoplastique, tôle d'acier ou aluminium.

En dehors de quelques zones locales épaissies pour des raisons particulières, par exemple de rigidité ou de fixation d'organes, la peau présente une épaisseur e sensiblement constante de 3 mm (millimètres).

Le panneau 9 est ajouré par endroits, pour permettre le passage de fixations, de fils électriques ou le logement d'organes divers.

Par exemple, le panneau 9 comporte une ouverture 11 permettant le logement d'une serrure ou de sa commande d'ouverture près du bord inférieur (inférieur, par rapport à sa position d'utilisation) 13 du hayon et une ouverture 15 permettant le logement du moteur d'essuie-glace. L'ouverture 11 est délimitée par des bords de la peau. On utilisera une partie de ces ouvertures, sur une section de passage d'environ 35x35 mm, pour y introduire certains éléments de fixation du préhenseur.

De part et d'autre de l'ouverture 15, le panneau comporte en outre deux orifices circulaires 17 de 30 mm de diamètre qui sont également délimités par des bords de la peau.

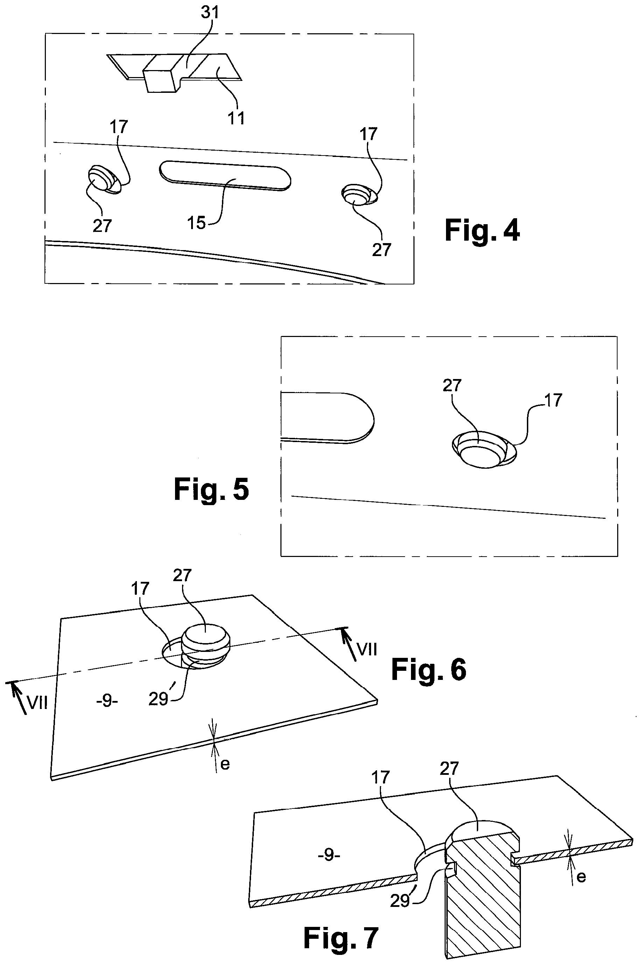

L'ouverture 11 et les orifices 17 sont donc délimités par des bords de la peau, avec l'épaisseur e prédéterminée, que l'on visualise plus nettement sur les figures 6 et 7.

Compte tenu de ses dimensions (environ 1300 mm de large, 1000 mm de haut) et de son poids (9 Kg environ), le hayon 5 peut être considéré, au sens de l'invention, comme une pièce de grandes dimensions et de poids élevé.

En outre, le hayon est considéré comme une pièce rigide, au sens où il conserve sa géométrie si on ne le tient que par son panneau 9.

Le préhenseur 3 comprend un châssis 19, qui est fixé à l'extrémité du bras manipulateur et sur lequel est montée une structure formée par des barres rigides 21, 23 perpendiculaires entre elles dans l'exemple, mais qui pourraient être disposées autrement.

Sur la barre 23, est montée une tige 25 à section carrée (cette section pouvant aussi être autre que carrée) d'environ 30 mm sur 30 mm, s'étendant à l'opposé du bras 1 du robot.

Sur la barre 21, sont montées deux tiges 27 à section de préférence circulaire (mais pouvant aussi être autre que circulaire) d'environ 20 mm de diamètre, parallèles entre elles et à la tige 25, s'étendant à l'opposé du bras 1 du robot. L'écartement entre les tiges 27 est identique à l'écartement entre les orifices 17 de la peau et le diamètre des tiges 27 est inférieur à celui des orifices 17.

Les tiges 25, 27 constituent des saillies du préhenseur ayant des extrémités aptes à porter une pièce à peindre par ses parties formées par la peau du panneau 9.

A cet effet, les extrémités libres des tiges 25, 27 comportent chacune une forme en creux (par exemple sous la forme d'une gorge ou d'une encoche) 29, 31 ayant une largeur sensiblement identique à l'épaisseur e de la peau. Dans la suite, on désignera la forme en creux par le terme « gorge ».

Comme représenté sur la figure 3, la gorge 29 des tiges cylindriques 27 s'étend transversalement sur une partie de leur circonférence située en regard de l'épaisseur peau.

On voit, sur la variante des figures 6 et 7, que la gorge 29' peut s'étendre sur toute la périphérie des tiges et que la largeur du fond de la gorge 29' est légèrement inférieure à l'épaisseur e de la peau. La gorge 29' a une section en V s'ouvrant depuis le fond de la gorge jusqu'à la surface extérieure de la tige, où la gorge est plus large que l'épaisseur e de la peau. La peau se trouve ainsi bloquée par coincement dans la gorge lorsque la tige vient en appui contre le bord de l'orifice 17, comme sur la figure 7.

La gorge 31 de la tige à section carrée 25, mieux visible sur la figure 2, est formée sur la seule face latérale de celle-ci dirigée vers les tiges cylindriques 27. Comme pour ces tiges cylindriques 27, la gorge 31 possède une section en V, allant du fond de la gorge, moins large que l'épaisseur e de la peau, à la face latérale de la tige, où l'embouchure de la gorge est plus large que l'épaisseur e de la peau.

Lorsque le préhenseur est en position de saisie d'une pièce, la distance d (figure 2) entre la tige à section carrée 25 et la barre 21 portant les tiges cylindriques 27 est telle que, lorsque les tiges cylindriques 27 sont engagées dans les orifices 17, la tige à section carrée 25 peut pénétrer librement dans l'ouverture 11, en restant à distance des bords, par exemple en conservant un jeu d'insertion de l'ordre de 5 mm.

Le châssis 19 comprend en outre un mécanisme (non représenté) de déplacement de la barre 23 par rapport à la barre 21, de manière à faire varier la distance d.

Ainsi, en réduisant cette distance alors que les tiges 25, 27 se trouvent respectivement dans l'ouverture 11 et les orifices 17, on rapproche les gorges 29 (ou 29') et 31 des bords de la peau délimitant ces ouverture et orifices, jusqu'à les mettre en appui contre ces bords et à coincer la peau dans lesdites gorges. Le préhenseur prend alors la position de retenue des figures 1 et 2.

Étant donné que le hayon 5 n'est relié au préhenseur en aucun autre endroit, la mise en appui des tiges 25, 27 contre la peau du hayon se produit avec un équilibrage des forces de plaquage entre les trois tiges et du poids du hayon, lorsque l'ensemble est statique. La forme circulaire des orifices 17 permet, par l'appui tangent (quasi ponctuel) des tiges cylindriques 27 contre les bords des orifices 17 et l'appui linéaire de la tige 25, un centrage du hayon selon sa direction transversale (la plus grande dimension du panneau 9) et selon sa hauteur (la deuxième plus grande dimension du hayon). Un léger hyper statisme de la liaison est compensé par la déformabilité du hayon (en dépit de sa rigidité), et/ou du préhenseur lui-même, ainsi que des jeux d'interfaçage entre la pièce et le préhenseur.

Le hayon peut donc être positionné rapidement et précisément sur le préhenseur, pour suivre ensuite exactement la trajectoire prévue pendant les opérations de peinture sans subir de déformations dues aux mouvements et accélérations imposées par le robot.

Une fois la peau pincée dans les trois gorges 29, 31, le hayon 5 est fermement maintenu par les trois tiges du préhenseur et peut être manipulé par le bras 1. Les accélérations subies par le hayon sont alors supportées par le préhenseur.

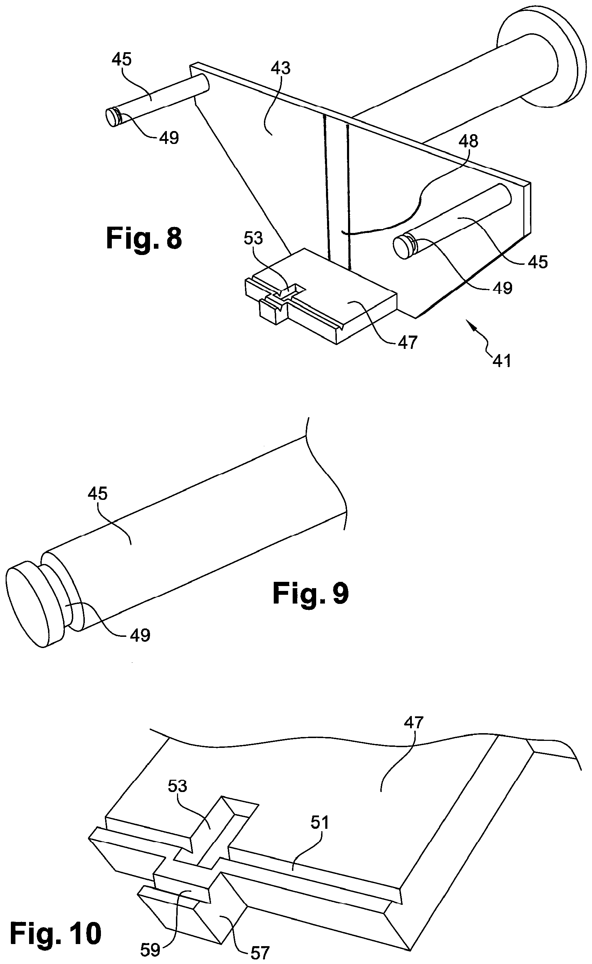

Dans l'exemple des figures 8 à 10, le préhenseur 41 comporte un châssis 43 portant deux tiges cylindriques 45 et un plateau 47.

Comme dans le premier exemple, les tiges cylindriques 45 ont chacune une extrémité libre munie d'une gorge 49 à section en V allant croissant depuis le fond de gorge, de largeur inférieure à l'épaisseur e de la peau, jusqu'à l'embouchure de la gorge, sur la face latérale de la tige 45, de largeur plus grande que l'épaisseur e de la peau.

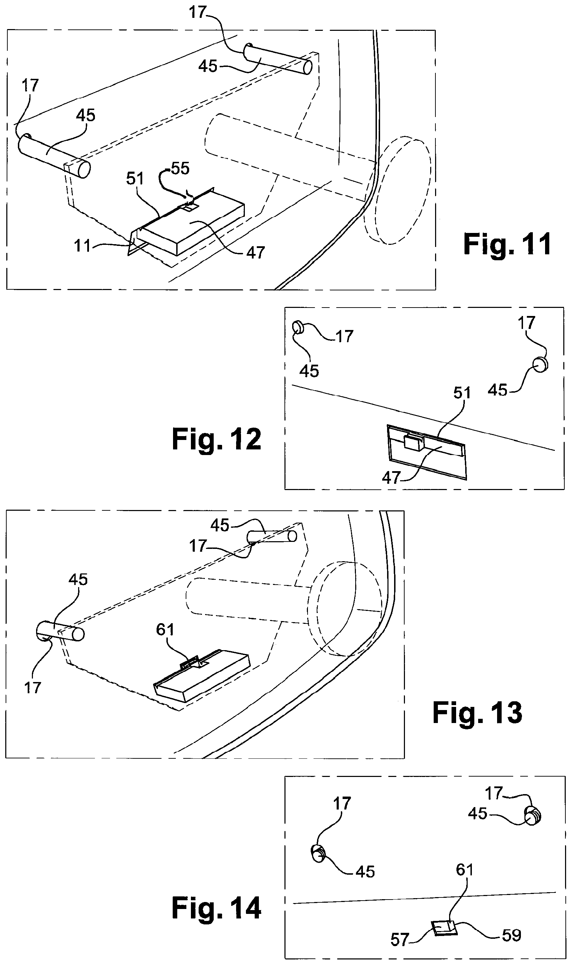

Le plateau 47 est constitué par une plaque s'étendant parallèlement aux tiges cylindriques 45, plaque qui est aussi munie d'une gorge 51 à section en V, dont le fond est moins large que l'épaisseur e de la peau et dont l'embouchure est plus large que l'épaisseur e de la peau. Un dégagement 53, creusé dans le plateau 47, permet l'adaptation du préhenseur à un hayon possédant une partie saillante 55 au voisinage du bord de la peau destiné à pénétrer dans la gorge, comme cela est visible sur la figure 11. Sur cette figure 11, le châssis 43 a été représenté transparent pour faciliter la compréhension.

Le châssis 43 comporte un mécanisme 48 de déplacement du plateau 47 et/ou des tiges 45 permettant d'éloigner et de rapprocher les deux tiges 45 du plateau 47, pour saisir un hayon dont la peau se trouve ainsi coincée dans les gorges 49, 51 des tiges 45 et du plateau 47.

Comme dans l'exemple précédent, les forces exercées par les deux tiges 45 et le plateau 47 sur la peau s'équilibrent entre elles (lorsque le bras est à l'arrêt) et la peau se positionne automatiquement par rapport au préhenseur, en s'alignant sur la gorge 51 du plateau et en se centrant par rapport aux deux tiges 45, dont les gorges 49 entrent en contact tangent avec le bord de peau délimitant les ouvertures 17. Ainsi, le bras du robot peut déplacer le hayon précisément sur la trajectoire souhaitée pendant sa peinture.

Comme on peut le voir sur les figures 10, 13 et 14, le préhenseur 41 est aussi adapté à un autre modèle de hayon, grâce à un second plateau 57 muni d'une seconde gorge 59 formée sur la plaque 47, parallèlement à la gorge 51 mais plus en avant que cette dernière. La seconde gorge 59 présente la même section en V que la gorge 51 mais s'étend sur une longueur moindre, d'environ 30 mm. Le second plateau 57 est destiné à pénétrer dans une ouverture 61 qui remplace, sur ce deuxième modèle de hayon, l'ouverture 11 du modèle précédent. L'ouverture 61 est sensiblement rectangulaire, bordée par la peau du hayon, comme précédemment, mais ses dimensions (environ 35 mm sur 35 mm) sont plus petites que celles de l'ouverture 11, d'où la longueur limitée du plateau 57.

On voit, sur les figures 13 et 14, comment le préhenseur peut saisir le hayon en pinçant sa peau dans les gorges des tiges cylindriques 45 et du second plateau 57.

Grâce à l'invention, on peut saisir une pièce à peindre en profitant de sa rigidité sans laisser de traces, ou des traces très discrètes, sur la pièce après peinture.

En outre, la possibilité d'adapter la forme du préhenseur à la forme de la pièce en se contentant d'y prévoir des orifices appropriés pour le pincement de la peau dans les gorges des saillies du préhenseur ou, encore mieux, en utilisant des orifices imposés pour d'autres raisons (processus de réalisation, assemblage ...), rend particulièrement simple et économique la mise en oeuvre de l'invention. Idéalement, et en particulier dans le cas d'une production d'une famille de pièces similaires (par exemple pour des variantes d'un même modèle de pièce), on cherchera à exploiter ou générer des orifices communs afin de standardiser le préhenseur, c'est-à-dire son caractère « universel ».

## Revendications

1. Préhenseur (3, 41) de pièce à peindre pour robot manipulateur, destiné à être fixé à l'extrémité d'un bras d'un robot manipulateur, ladite pièce comprenant des parties formées par une peau (9) d'épaisseur (e) prédéfinie, ledit préhenseur comprenant :
- un châssis (19, 43) muni de moyens de fixation au bras d'un robot,
- des saillies (25, 27, 45, 47, 57) montées sur le châssis et ayant des extrémités aptes à porter une pièce à peindre par ses parties formées par la peau,
- des moyens de déplacement (48) d'au moins certaines desdites saillies par rapport au châssis,
l'extrémité d'au moins l'une d'entre lesdites saillies comportant une forme en creux (29, 29', 31, 49, 51, 59) ayant une conformation permettant d'y engager la tranche de la peau pour la maintenir dans la forme en creux lorsque la saillie est appuyée contre un bord de cette peau,
lesdits moyens de déplacement (48) d'au moins certaines des saillies permettant de déplacer ces saillies entre une première position dans laquelle chaque saillie est voisine mais écartée d'un bord de la peau et une seconde position dans laquelle chaque saillie est en appui sur la peau ou a sa forme en creux en appui contre le bord de la peau, la tranche de la peau étant engagée dans la forme en creux (29, 31, 49, 51, 59) de ladite saillie, l'appui de chaque saillie contre la peau ou le bord de la peau résultant de l'appui des autres saillies contre la peau ou les autres bords de la peau
lesdites saillies étant choisies parmi :
- des tiges (25, 27, 47) ayant chacune une extrémité munie d'une forme en creux (29,31,49),
- des plateaux (47, 57) ayant un bord d'extrémité muni d'une forme en creux (51, 59
- des contre formes présentant un relief complémentaire à celui d'une partie de la peau, aptes à s'encastrer dans la peau de façon intime par simple appui mutuel et ledit préhenseur comprenant deux tiges et une contre forme.

2. Préhenseur selon la revendication précédente, dans lequel les deux tiges sont déplaçables, tandis que la contre forme est fixe.

3. Préhenseur selon l'une des revendications précédentes, dans lequel la forme en creux d'au moins une saillie est une gorge (29, 29', 31, 49, 51, 59) transversale à son axe principal.

4. Préhenseur selon l'une des revendications précédentes, dans lequel les formes en creux (29, 29', 31, 49, 51, 59) ont une section évasée, avec un fond dont la largeur est inférieure à l'épaisseur (e) de la peau et dont l'embouchure est plus large que l'épaisseur de la peau.

5. Combinaison d'un préhenseur selon l'une quelconque des revendications précédentes et d'au moins une pièce de carrosserie portée par ce préhenseur.

## Patentansprüche

1. Greifer (3, 41) von Lackier-Werkstücken für Handhabungsroboter, der für die Befestigung an dem Ende eines Armes eines Handhabungsroboters bestimmt ist, wobei das Werkstück Teile umfasst, die von einer Haut (9) vordefinierter Dicke (e) gebildet sind, wobei der Greifer Folgendes umfasst:
- einen Rahmen (19, 43), der mit Mitteln zur Befestigung an einem Arm eines Roboters versehen ist,
- Vorsprünge (25, 27, 45, 47, 57), die an dem Rahmen montiert sind und Enden haben, die in der Lage sind, ein Lackier-Werkstück über seine von der Haut gebildeten Teile zu tragen,
- Mittel zum Bewegen (48) mindestens bestimmter der Vorsprünge relativ zu dem Rahmen,
wobei das Ende mindestens eines der Vorsprünge eine vertiefte Form (29, 29', 31, 49, 51, 59) mit einer Formgebung aufweist, die das Einschieben der Schmalseite der Haut in diese gestattet, um sie in der vertieften Form zu halten, wenn der Vorsprung sich gegen einen Rand dieser Haut abstützt,
wobei die Mittel zum Bewegen (48) mindestens bestimmter der Vorsprünge das Bewegen dieser Vorsprünge gestatten zwischen einer ersten Stellung, in der jeder Vorsprung zu einem Rand der Haut benachbart, aber davon beabstandet ist, und einer zweiten Stellung, in der jeder Vorsprung sich auf der Haut abstützt oder seine vertiefte Form sich gegen den Rand der Haut abstützt, wobei die Schmalseite der Haut in die vertiefte Form (29, 31, 49, 51, 59) des Vorsprungs eingeschoben ist, wobei die Abstützung jedes Vorsprungs gegen die Haut oder den Rand der Haut aus der Abstützung der anderen Vorsprünge gegen die Haut oder die anderen Ränder der Haut resultiert,
wobei die Vorsprünge ausgewählt sind aus
- Stäben (25, 27, 47), die jeweils ein Ende haben, das mit einer vertieften Form (29, 31, 49) versehen ist,
- Platten (47, 57), die jeweils einen Endrand haben, der mit einer vertieften Form (51, 59) versehen ist,
- Gegenformen mit einer Erhebung, die zu der eines Teils der Haut komplementär ist, die in der Lage sind, in der Haut durch einfache gegenseitige Abstützung innig einzurasten, und wobei der Greifer zwei Stäbe und einen Gegenform umfasst.

2. Greifer nach dem vorhergehenden Anspruch, wobei die zwei Stäbe verschiebbar sind, während die Gegenform feststehend ist.

3. Greifer nach einem der vorhergehenden Ansprüche, wobei die vertiefte Form mindestens eines Vorsprungs eine Rille (29, 29', 31, 49, 51, 59) ist, die zu seiner Hauptachse quergerichtet ist.

4. Greifer nach einem der vorhergehenden Ansprüche, wobei die vertieften Formen (29, 29', 31, 49, 51, 59) einen aufgeweiteten Querschnitt haben, mit einem Boden, dessen Breite kleiner als die Dicke (e) der Haut ist und deren Mündung breiter als die Dicke der Haut ist.

5. Kombination aus einem Greifer nach einem der vorhergehenden Ansprüche und mindestens einem Karosserieteil, das durch diesen Greifer getragen wird.

## Claims

1. Painting workpiece gripper (3, 41) for handling robot, designed to be attached to the end of an arm of a handling robot, said workpiece comprising parts formed by a skin (9) of predefined thickness (e), said gripper comprising:
- a chassis (19, 43) provided with means of attachment to the arm of a robot,
- protrusions (25, 27, 45, 47, 57) mounted on the chassis and having ends capable of carrying a workpiece to be painted by its parts formed by the skin,
- means (48) for displacing at least some of said protrusions relative to the chassis,
the end of at least one of said protrusions comprising a hollow shape (29, 29', 31, 49, 51, 59) having a conformation enabling it to engage the edge of the skin to hold it in the hollow shape when the protrusion is pressed against an edge of this skin,
said means (48) for displacing at least some of the protrusions being used to displace these protrusions between a first position in which each protrusion is next to but distant from an edge of the skin and a second position in which each protrusion is pressed against the skin or has its hollow shape pressed against the edge of the skin, the edge of the skin being engaged in the hollow shape (29, 31, 49, 51, 59) of said protrusion, each protrusion being pressed against the skin or the edge of the skin by the pressure from the other protrusions against the skin or the other edges of the skin
said protrusions being selected from:
- rods (25, 27, 47) each having an end provided with a hollow shape (29, 31, 49),
- plates (47, 57) having an end edge provided with a hollow shape (51, 59)
- counter-shapes having a relief complementary to that of a part of the skin, capable of fitting intimately in the skin by simple mutual pressure and said gripper comprising two rods and a counter-shape.

2. Gripper according to the preceding claim, wherein the two rods are displaceable, whereas the counter-shape is fixed.

3. Gripper according to one of the preceding claims, wherein the hollow shape of at least one protrusion is a groove (29, 29', 31, 49, 51, 59) transverse to its main axis.

4. Gripper according to one of the preceding claims, wherein the hollow shapes (29, 29', 31, 49, 51, 59) have a flared cross-section, with a bottom whose width is less than the thickness (e) of the skin and whose opening is wider than the thickness of the skin.

5. Combination of a gripper according to any one of the preceding claims and at least one body workpiece carried by this gripper.
